# EUROPEAN PATENT APPLICATION

(11) **EP 0 724 269 A1**
(43) Date of publication of application: **31.07.1996**
(21) Application number: 96101128.5
(22) Date of filing: 26.01.1996
(51) Int. Cl.: G21B 1/00

(54) **Method of and apparatus for collecting occluded hydrogen atomic nuclei**

(30) Priority: 29.01.1995 JP 31493/95
(71) Applicant: CHIKUMA, Toichi, Tokyo (JP)
(72) Inventor: CHIKUMA, Toichi, Tokyo (JP)
(74) Representative: Hering, Hartmut, Dipl.-Ing.

(57) **Abstract**

The invention provides a hydrogen atomic nucleus collecting method and apparatus by which a high concentration of aggregated hydrogen atomic nuclei after occluded into a hydrogen occluding substance can be achieved to facilitate confirmation or detection of an actually occurring phenomenon. A collecting negative electrode (9) is disposed in the proximity of an end portion (7) of a hydrogen occluding substance (4) which occludes hydrogen atomic nuclei. A collecting positive electrode (8) is disposed spirally around the hydrogen occluding substance (4) and cooperates with the collecting negative electrode (9) to produce a conical electric field whose electric lines of force converge from the collecting positive electrode (8) toward the collecting negative electrode (9). By the conical electric field, hydrogen atomic nuclei occluded in the hydrogen occluding substance (4) are collected to the end portion (7) of the hydrogen occluding substance (4).

## Description

This invention relates to a method of and an apparatus for collecting hydrogen atomic nuclei occluded in an occluding substance such as palladium to a particular portion of the occluding substance. In the present specification, the terminology "hydrogen atomic nuclei" is used to include also atomic nuclei of deuterium and tritium.

Various attempts have been made to cause a cold nuclear fusion. According to one of the attempts, heavy water is electrolyzed so that atomic nuclei of deuterium are occluded into a cathode made of a hydrogen occluding substance such as palladium, or deuterium gas is used as a hydrogen occluding substance in place of heavy water. Also a method for containing hydrogen atomic nuclei occluded once so that they may not be lost is known.

Although various experiments have been attempted, a method which actually proves occurrence of cold nuclear fusion has not been found out as yet.

It is an object of the present invention to provide a hydrogen atomic nucleus collecting method and apparatus by which a high concentration of aggregated hydrogen atomic nuclei after occluded into a hydrogen occluding substance can be achieved to facilitate confirmation or detection of an actually occurring phenomenon while it is not particularly intended to cause a cold nuclear fusion.

In order to attain the object described above, according to an aspect of the present invention, there is provided a method of collecting occluded hydrogen atomic nuclei, which comprises the step of forming, around a hydrogen occluding substance for occluding hydrogen atomic nuclei, a conical electric field whose electric lines of force converge from a collecting positive electrode toward a collecting negative electrode so that hydrogen atomic nuclei occluded in the hydrogen occluding substance may be collected toward the collecting negative electrode.

According to another aspect of the present invention, there is provided an apparatus for collecting occluded hydrogen atomic nuclei, which comprises a collecting negative electrode disposed in the proximity of an end portion of a hydrogen occluding substance which occludes hydrogen atomic nuclei, and a collecting positive electrode disposed spirally around the hydrogen occluding substance for cooperating with the collecting negative electrode to produce a conical electric field whose electric lines of force converge from the collecting positive electrode toward the collecting negative electrode.

In the method and apparatus, the collecting positive electrode and the collecting negative electrode cooperate with each other to form a conical electric field whose electric lines of force converge from the collecting positive electrode toward the collecting negative electrode, and the hydrogen occluding substance is partially positioned within the electric field. Consequently, since hydrogen atomic nuclei occluded in the crystal of the hydrogen occluding substance with the electrons discharged therefrom, they are compulsorily attracted to the collecting negative electrode and are successively collected to a particular portion of the hydrogen occluding substance. Accordingly, a resultant phenomenon such as generation of heat can be confirmed readily from a variation in concentration of the aggregated hydrogen atomic nuclei. Further, due to the conical configuration of the electric field, the hydrogen atomic nuclei occluded in the hydrogen occluding member can be concentrated efficiently toward one point of the hydrogen occluding substance.

According to a further aspect of the present invention, there is provided an apparatus for collecting occluded hydrogen atomic nuclei, which comprises a collecting negative electrode disposed on one side with respect to a hydrogen occluding substance which occludes hydrogen atomic nuclei, and a collecting positive electrode disposed on the other side with respect to the hydrogen occluding substance and having a spherical plane centered at the collecting negative electrode for cooperating with the collecting negative electrode to form a conical electric field whose electric lines of force converge from the collecting positive electrode toward the collecting negative electrode.

With the hydrogen atomic nuclei collecting apparatus, such a phenomenon as generation of heat can be confirmed readily and hydrogen atomic nuclei occluded in the hydrogen occluding member can be concentrated efficiently toward one point of the hydrogen occluding substance similarly as described above.

Preferably, a most portion of the hydrogen occluding substance, the collecting positive electrode and the collecting negative electrode are accommodated in a vacuum vessel. Here, since the portion of the hydrogen occluding substance to which occluded hydrogen atomic nuclei are collected is accommodated in the vacuum vessel, even if a great amount of heat is generated from the portion, the safety is assured.

According to a still further aspect of the present invention, there is provided an apparatus for collecting occluded hydrogen atomic nuclei, which comprises a collecting negative electrode disposed in the inside of a hydrogen occluding substance which occludes hydrogen atomic nuclei with an insulator interposed therebetween, and a collecting positive electrode disposed outside the hydrogen occluding substance and having a spherical plane centered at the collecting negative electrode for cooperating with the collecting negative electrode to form a conical electric field whose electric lines of force converge from the collecting positive electrode toward the collecting negative electrode.

Also with the hydrogen atomic nuclei collecting apparatus, such a phenomenon as generation of heat can be confirmed readily and hydrogen atomic nuclei occluded in the hydrogen occluding member can be concentrated efficiently toward one point of the hydrogen occluding substance similarly as described above.

Preferably, a most portion of the hydrogen occluding substance, the collecting positive electrode and the collecting negative electrode are accommodated in a vacuum vessel. Here, since the portion of the hydrogen occluding substance to which occluded hydrogen atomic nuclei are collected is accommodated in the vacuum vessel, even if a great amount of heat is generated from the portion, the safety is assured.

The above and other objects, features and advantages of the present invention will become apparent from the following description and the appended claims, taken in conjunction with the accompanying drawings in which like parts or elements are denoted by like reference characters.
FIG. 1 is a schematic view of a hydrogen atomic nucleus collecting apparatus showing a first preferred embodiment of the present invention together with a hydrogen atomic nucleus occluding apparatus;
FIG. 2 is a schematic view of another hydrogen atomic nucleus collecting apparatus showing a second preferred embodiment of the present invention; and
FIG. 3 is a schematic view of a further hydrogen atomic nucleus collecting apparatus showing a third preferred embodiment of the present invention.

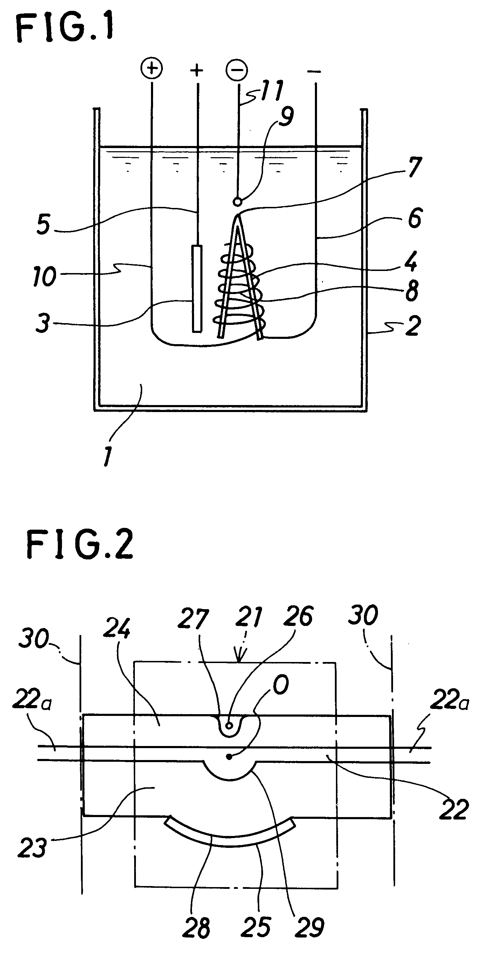

Referring first to FIG. 1, there is shown a hydrogen atomic nucleus collecting apparatus according to a first preferred embodiment of the present invention together with a hydrogen atomic nucleus occluding apparatus. The hydrogen atomic nucleus occluding apparatus includes a electrolytic cell 2 serving as a reactor vessel in which heavy water 1 is accommodated, an occluding positive electrode 3 made of a metal such as platinum and an occluding negative electrode 4 made of a single metal or an alloy having a hydrogen occluding property such as palladium. The electrodes 3 and 4 are disposed in an opposing relationship to each other in the electrolytic cell 2, and a dc voltage or a pulse voltage is applied between the occluding positive electrode 3 and the occluding negative electrode 4 from a power supply not shown via a pair of insulator-coated electric wires 5 and 6. The occluding positive electrode 3 is in the form of a plate or a block. Meanwhile, the occluding negative electrode 4 which occludes hydrogen atomic nuclei has an inverted V-shaped cross section or a conical profile and is pointed at an upper end portion 7 thereof.

The hydrogen atomic nucleus collecting apparatus includes a collecting positive electrode 8 coated with an insulator, a collecting negative electrode 9 coated with an insulator similarly, and a power supply not shown for applying a dc voltage between the electrodes 8 and 9 via insulator-coated electric wires 10 and 11 from the outside of the electrolytic cell 2. The collecting positive electrode 8 is coiled spirally and disposed such that it conically surrounds the occluding negative electrode 4 from the bottom to the top. The collecting negative electrode 9 is in the form of a needle having a spherical or pointed lower end and is disposed in the proximity of and just above the upper end portion 7 of the occluding negative electrode 4.

In the arrangement shown in FIG. 1, if a dc voltage or a pulse voltage is applied between the occluding positive electrode 3 and the occluding negative electrode 4 of the hydrogen atomic nucleus occluding apparatus to electrolyze the heavy water 1, then deuterium atomic nuclei after electrons have been discharged are occluded into the crystal of the occluding negative electrode 4 made of palladium or some other suitable metal. The amount of occluded deuterium atomic nuclei increases as the time passes. After a sufficient amount of deuterium atomic nuclei is occluded, a dc voltage is applied between the collecting positive electrode 8 and the collecting negative electrode 9 of the hydrogen atomic nucleus collecting apparatus. Consequently, a conical electric field is formed around the occluding negative electrode 4. Since the electric lines of force of the electric field converge to the collecting negative electrode 9 and the deuterium atomic nuclei occluded in the occluding negative electrode 4 with the electrons discharged therefrom have positive charge, the occluded deuterium atomic nuclei are attracted toward the collecting negative electrode 9 along the electric lines of force and are thus collected to the pointed upper end portion 7 of the occluding negative electrode 4. The concentration of the deuterium atomic nuclei at the upper end portion 7 of the occluding negative electrode 4 is so high that extraordinary heat is expected.

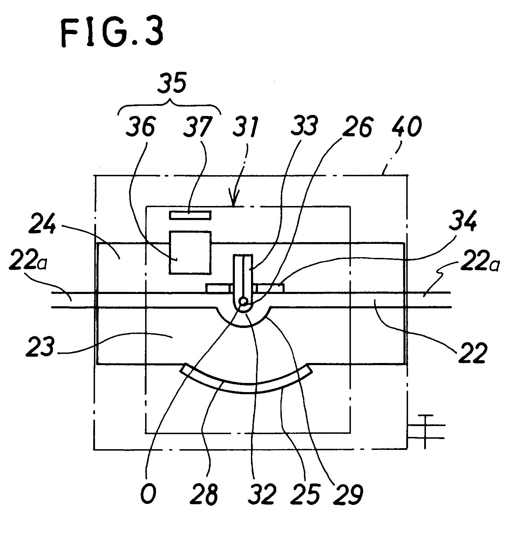

Referring now to FIG. 2, there is shown a hydrogen atomic nucleus collecting apparatus according to a second preferred embodiment of the present invention. The hydrogen atomic nucleus collecting apparatus is generally denoted at 21 and includes an occluding negative electrode 22 made of palladium or some other suitable substance and supported on a base plate 23 serving as an insulating layer. A cover 24 serving as another insulating layer is placed on the occluding negative electrode 22. Further, a collecting positive electrode 25 is disposed on the base plate 23 while a collecting negative electrode 26 is disposed on the cover 24. The collecting positive electrode 25 and the collecting negative electrode 26 are opposed to each other with the base plate 23, the occluding negative electrode 22 and the cover 24 interposed therebetween. The base plate 23 and the cover 24 are made of a material such as a ceramic material which has an electrically insulating property and does not pass hydrogen atomic nuclei therethrough. The occluding negative electrode 22 is partially held between the base plate 23 and the cover 24, and only protruding portions 22a of the occluding negative electrode 22 which are not held between the base plate 23 and the cover 24 are positioned within a reactor vessel 30 so that deuterium atomic nuclei may be occluded into the occluding negative electrode 22 through the protruding portions 22a.

The collecting negative electrode 26 has a spot-like or spherical shape at least at an end thereof and is disposed in a recessed portion 27 of the cover 24 so that it may be positioned as near as possible to the occluding negative electrode 22. The collecting positive electrode 25 extends in a spherical plane along an arc centered at the collecting negative electrode 26. The base plate 23 has, on an outer side face thereof, a spherical projection 28 along an arc centered at the collecting negative electrode 26, and the collecting positive electrode 25 is secured to the base plate 23 along the spherical projection 28. Meanwhile, the occluding negative electrode 22 has, on a lower face thereof adjacent the collecting positive electrode 25, a spherical projection 29 along an arc centered at a point O at the center of the inside of the occluding negative electrode 22.

In the hydrogen atomic nucleus collecting apparatus of the construction shown in FIG. 2, if a voltage is applied between the collecting positive electrode 25 and the collecting negative electrode 26, then a conical electric field is formed whose electric lines of force converge from the collecting positive electrode 25 toward the collecting negative electrode 26. Since deuterium atomic nuclei occluded into the crystal of the occluding negative electrode 22 through the protruding portions 22a after the electrons have been discharged have positive charge, they are attracted toward the collecting negative electrode 26. In this instance, since the spherical projection 29 centered at the point O is provided on the occluding negative electrode 22 and is disposed in the conical electric field, the occluded deuterium atomic nuclei are successively collected toward the point O.

Referring now to FIG. 3, there is shown a hydrogen atomic nucleus collecting apparatus according to a third preferred embodiment of the present invention. The hydrogen atomic nucleus collecting apparatus generally denoted at 31 is a modification to and includes several common components to those of the hydrogen atomic nucleus collecting apparatus shown in FIG. 2. In the present hydrogen atomic nucleus collecting apparatus 31, however, a most portion of the occluding negative electrode 22 except the protruding portions 22a is accommodated in a vacuum vessel 40 in order to assure the security against generated heat. Further, the occluding negative electrode 22 has a recessed portion 32 provided on the opposite side thereof to the spherical projection 29 so as to allow the collecting negative electrode 26 to be positioned at the point O which coincides with the center of the inside of the occluding negative electrode 22 which is the center of the spherical projection 29. The collecting negative electrode 26 is embedded in an insulator 33 and removably received in the recessed portion 32 together with the insulator 33.

It is to be noted that also the hydrogen atomic nucleus collecting apparatus of the second embodiment shown in FIG. 2 may be accommodated in a vacuum vessel similarly as in the third embodiment of FIG. 3.

In the hydrogen atomic nucleus collecting apparatus of the second and third embodiments, if charge is produced by electrostatic induction, the charge may possibly reduce the conical electric field extending toward the collecting negative electrode 26. In order to prevent such production of charge, in the hydrogen atomic nucleus collecting apparatus 31 of the third embodiment shown in FIG. 3, an induced charge removing (positive) electrode 34 in the form of a ring is disposed between the occluding negative electrode 22 and the cover 24 such that it surrounds the insulator 33. Further, also a thermoelectric conversion outputting apparatus 35 for converting heat generated in the hydrogen atomic nucleus collecting apparatus 31 into electric energy and outputting the electric energy is provided in the vacuum vessel 40. The thermoelectric conversion outputting apparatus 35 in the present embodiment makes use of thermionic conversion which operates even in the vacuum and includes an outputting negative electrode 36 for emitting thermions and an outputting positive electrode 37 disposed in an opposing relationship to the outputting negative electrode 36 for receiving thermions emitted from the outputting negative electrode 36.

Having now fully described the invention, it will be apparent to one of ordinary skill in the art that many changes and modifications can be made thereto without departing from the spirit and scope of the invention as set forth herein.

## Claims

1. A method of collecting occluded hydrogen atomic nuclei, characterized in that
a conical electric field whose electric lines of force converge from a collecting positive electrode toward a collecting negative electrode is formed around a hydrogen occluding substance which occludes hydrogen atomic nuclei so that hydrogen atomic nuclei occluded in the hydrogen occluding substance may be collected toward said collecting negative electrode.

2. An apparatus for collecting occluded hydrogen atomic nuclei, characterized in that it comprises:
a collecting negative electrode (9) disposed in the proximity of an end portion (7) of a hydrogen occluding substance (4) which occludes hydrogen atomic nuclei; and
a collecting positive electrode (8) disposed spirally around the hydrogen occluding substance (4) for cooperating with said collecting negative electrode (9) to produce a conical electric field whose electric lines of force converge from said collecting positive electrode (8) toward said collecting negative electrode (9).

3. An apparatus for collecting occluded hydrogen atomic nuclei as set forth in claim 2, characterized in that the hydrogen occluding substance (4), said collecting positive electrode (8) and said collecting negative electrode (9) are disposed in a rector vessel (2) in which hydrogen atomic nuclei are to be occluded into the hydrogen occluding substance (4).

4. An apparatus for collecting occluded hydrogen atomic nuclei, characterized in that it comprises:
a collecting negative electrode (26) disposed on one side with respect to a hydrogen occluding substance (22) which occludes hydrogen atomic nuclei; and
a collecting positive electrode (25) disposed on the other side with respect to the hydrogen occluding substance (22) and having a spherical plane centered at said collecting negative electrode (26) for cooperating with said collecting negative electrode (26) to form a conical electric field whose electric lines of force converge from said collecting positive electrode (25) toward said collecting negative electrode (26).

5. An apparatus for collecting occluded hydrogen atomic nuclei as set forth in claim 4, characterized in that a most portion of the hydrogen occluding substance (22), said collecting positive electrode (25) and said collecting negative electrode (26) are accommodated in a vacuum vessel (40).

6. An apparatus for collecting occluded hydrogen atomic nuclei, characterized in that it comprises:
a collecting negative electrode (26) disposed in the inside of a hydrogen occluding substance (22) which occludes hydrogen atomic nuclei with an insulator (33) interposed therebetween; and
a collecting positive electrode (25) disposed outside the hydrogen occluding substance (22) and having a spherical plane centered at said collecting negative electrode (26) for cooperating with said collecting negative electrode (26) to form a conical electric field whose electric lines of force converge from said collecting positive electrode (25) toward said collecting negative electrode (26).

7. An apparatus for collecting occluded hydrogen atomic nuclei as set forth in claim 6, characterized in that a most portion of the hydrogen occluding substance (22), said collecting positive electrode (25) and said collecting negative electrode (26) are accommodated in a vacuum vessel (40).
